# EUROPEAN PATENT APPLICATION

(11) **EP 4 553 916 A1**
(43) Date of publication of application: **14.05.2025**
(21) Application number: 24208461.4
(22) Date of filing: 23.10.2024
(51) Int. Cl.: H01M 4/133, H01M 4/1393, H01M 4/36, H01M 4/587, H01M 10/0567, H01M 10/0569

(54) **LITHIUM SECONDARY BATTERY, MANUFACTURING METHOD OF NEGATIVE ELECTRODE ACTIVE MATERIAL, AND MANUFACTURING METHOD OF LITHIUM SECONDARY BATTERY**

(30) Priority: 07.11.2023 KR 20230152797
(71) Applicant: SK On Co., Ltd., Seoul 03161 (KR)
(72) Inventor: KIM, Hyun Wook, 34124 Daejeon (KR)
(74) Representative: Stolmár & Partner Patentanwälte PartG mbB

(57) **Abstract**

A lithium secondary battery according an embodiment of the present disclosure includes: a positive electrode; a negative electrode including a carbon-based negative electrode active material (11) coated with a reduced graphene oxide (r-GO) (12); and an electrolyte including a propylene carbonate-based compound. A manufacturing method of a negative electrode active material according to an embodiment of the present disclosure includes: doping a carbon-based negative electrode active material (11) with nitrogen; coating a surface of the carbon-based negative active material (11) with a graphene oxide; and reducing the graphene oxide.

## Description

### BACKGROUND OF THE INVENTION

### 1. Field

Embodiments of the present disclosure relate to a lithium secondary battery, a manufacturing method of a negative electrode active material, and a manufacturing method a lithium secondary battery.

### 2. Description of the Related Art

As the electronics, communications, and space industries develop, demand for lithium secondary batteries as an energy power source is drastically increasing. In particular, as the importance of global eco-friendly policies is emphasized, the electric vehicle market is growing swiftly, and research and development on lithium secondary batteries are being actively conducted worldwide.

A lithium secondary battery includes a positive electrode, a negative electrode, and a separator disposed therebetween, and a positive electrode and a negative electrode are each provided with an active material which lithium ions may be inserted to and extracted from.

Generally, a two-/three-component electrolyte based on ethylene carbonate (EC) is used as an electrolyte for lithium secondary batteries. However, EC has a high melting point, so its use temperature is limited, and it may bring about significant deterioration of battery performance at low temperatures. Accordingly, propylene carbonate (PC) is mixed and used for the purpose of improving low-temperature performance, but when PC is used together in an electrolyte, there is a problem that, rather than forming a stable solid electrolyte interphase (SEI) film on the surface of a carbon-based negative electrode active material, the carbon-based negative electrode active material, particularly, the interlayer of graphite is destroyed by exfoliation.

Therefore, there is a need to develop a new technology that can improve low-temperature performance by using PC in an electrolyte while preventing the destruction of a carbon-based negative electrode active material due to the addition of PC.

### SUMMARY OF THE INVENTION

Embodiments of the present disclosure may provide a lithium secondary battery that has excellent low-temperature performance and can prevent destruction of an negative electrode active material, a manufacturing method of a negative electrode active material, and a manufacturing method of a lithium secondary battery.

A lithium secondary battery according to one embodiment of the present disclosure can be widely applied in the field of electric vehicles, battery charging stations, and green technology, such solar power generation, and wind power generation using batteries.

A lithium secondary battery according to an embodiment of the present disclosure includes: a positive electrode; a negative electrode including a carbon-based negative electrode active material coated with a reduced graphene oxide (r-GO); and an electrolyte including a propylene carbonate (PC)-based compound.

In an embodiment, the electrolyte may further include a lithium salt.

In an embodiment, the carbon-based negative electrode active material coated with the r-GO may have a core-shell structure consisting of a core including a carbon-based negative electrode active material and a shell including an r-GO.

In an embodiment, the carbon-based negative electrode active material may include a negative electrode active material of a plate type structure.

In an embodiment, the carbon-based negative electrode active material may include artificial graphite, natural graphite, or a combination thereof.

In an embodiment, the carbon-based negative electrode active material may include an edge-plane, and the r-GO surrounds the edge-plane of the carbon-based negative electrode active material.

In an embodiment, the carbon-based negative electrode active material may include nitrogen.

A manufacturing method of a negative electrode active material according to an embodiment of the present disclosure includes: doping a carbon-based negative electrode active material with nitrogen; coating a surface of the carbon-based negative active material with a graphene oxide; and reducing the graphene oxide.

In an embodiment, the doping a carbon-based negative electrode active material with nitrogen may include heat-treating the carbon-based negative electrode active material under an atmosphere in which ammonia gas flows.

In an embodiment, the coating a surface of the carbon-based negative electrode active material with a graphene oxide may include: dispersing the carbon-based negative electrode active material in a solvent; and injecting the graphene oxide into a solvent in which the carbon-based negative electrode active material is dispersed.

In an embodiment, the graphene oxide may be applied onto the surface of the carbon-based negative electrode active material by electrostatic attraction.

In an embodiment, the reducing the graphene oxide may include heat-treating the carbon-based negative electrode active material coated with the graphene oxide under an atmosphere in which ammonia gas flows.

A manufacturing method of a lithium secondary battery according to an embodiment of the present disclosure includes: preparing a carbon-based negative electrode active material coated with a reduced graphene oxide (r-GO); manufacturing an electrode assembly including a positive electrode and a negative electrode including the negative electrode active material; and injecting an electrolyte including a PC-based compound into an accommodating space where the electrode assembly is accommodated therein.

In an embodiment, the preparing a carbon-based negative electrode active material coated with an r-GO may include: doping a carbon-based negative electrode active material with nitrogen; coating a surface of the carbon-based negative active material with a graphene oxide; and reducing the graphene oxide.

According to the present disclosure, a lithium secondary battery that has excellent low-temperature performance and can prevent destruction of an negative electrode active material, a manufacturing method of a negative electrode active material, and a manufacturing method of a lithium secondary battery may be provided.

### BRIEF DESCRIPTION OF THE DRAWINGS

FIG. 1 shows a diagram for explaining a negative electrode active material according to one embodiment of the present disclosure.
FIG. 2 shows a flowchart for explaining a manufacturing method of a lithium secondary battery according to one embodiment of the present disclosure.
FIG. 3 shows a flowchart for explaining a manufacturing method of a negative electrode active material according to one embodiment of the present disclosure.
FIG. 4 shows a graph illustrating the capacity retention of lithium secondary batteries according to one example and comparative examples of the present disclosure.

### DETAILED DESCRIPTION

Hereinafter, the present disclosure will be described in detail. However, this is merely illustrative, and the present disclosure is not limited to the specific embodiments described in an illustrative manner.

### Lithium secondary battery

In one aspect of the present disclosure, provided is a lithium secondary battery including: a positive electrode; a negative electrode including a carbon-based negative electrode active material coated with a reduced graphene oxide (r-GO); and an electrolyte including a PC-based compound.

Hereinafter, the lithium secondary battery provided in one aspect of the present disclosure will be described by components.

First, the lithium secondary battery provided in one aspect of the present disclosure includes a positive electrode.

A positive electrode may include a positive electrode current collector and a positive electrode active material layer disposed on the positive electrode current collector. The positive electrode active material layer may be formed on at least one surface of the positive electrode current collector. In other words, the positive electrode active material layer may be formed on one surface of the positive electrode current collector, or may be formed on both surfaces of the positive electrode current collector.

A positive electrode active material layer may include a positive electrode active material. A positive electrode active material may be a material which lithium ions may be inserted to or extracted from, and in one embodiment, an positive electrode active material may be a lithium metal oxide. For example, a positive electrode active material may be one of a lithium manganese-based oxide, a lithium nickel-based oxide, a lithium cobalt-based oxide, a lithium nickel manganese-based oxide, a lithium nickel cobalt aluminum-based oxide, a lithium iron phosphate-based compound, a lithium manganese phosphate-based compound, a lithium cobalt phosphate-based compound, and a lithium vanadium phosphate-based compound, and is not necessarily limited to a specific example.

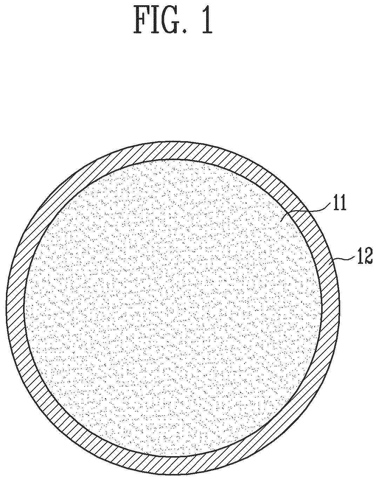

FIG. 1 shows a diagram for explaining a negative electrode active material according to one embodiment of the present disclosure.

In addition, a lithium secondary battery provided in one aspect of the present disclosure includes a negative electrode.

A negative electrode may include a negative electrode current collector and a negative electrode active material layer.

A negative electrode current collector is not particularly limited as long as it is conductive without causing chemical changes in a secondary battery. For example, copper, stainless steel, aluminum, nickel, titanium, calcined carbon, copper or stainless steel surface-treated with carbon, nickel, titanium, silver, or the like, an aluminum-cadmium alloy, or the like may be used. In addition, fine irregularities may be formed on the surface to strengthen the bonding power of a negative electrode active material, and it may be used in various forms such as films, sheets, foils, nets, porous materials, foams, and non-woven fabrics.

A negative electrode active material layer may be formed on at least one surface of a negative electrode current collector. In other words, a negative electrode active material layer may be formed on one surface of a negative electrode current collector or on both surfaces of the negative electrode current collector.

A negative electrode active material layer may include a negative electrode active material. A negative electrode active material may include a carbon-based negative electrode active material, and the surface of a carbon-based negative electrode active material may include a reduced graphene oxide (r-GO). Through FIG. 1, the structure of a negative electrode active material according to an embodiment of the present disclosure may be understood. In an embodiment, a negative electrode active material may have a core-shell structure consisting of a carbon-based negative electrode active material core 11 and an r-GO shell 12. In an embodiment, the carbon-based negative electrode active material coated with the r-GO may have a core-shell structure consisting of a core including a carbon-based negative electrode active material 11 and a shell including an r-GO 12.

In one embodiment, a carbon-based negative electrode active material 11 may include one or more selected from the group consisting of artificial graphite, natural graphite, hard carbon, soft carbon, carbon black, acetylene black, Ketjen Black, Super P, and graphene.

Specifically, in an embodiment, a carbon-based negative electrode active material 11 may include a negative electrode active material with a plate-type structure. In an embodiment, the carbon-based negative electrode active material may include artificial graphite, natural graphite, or a combination thereof. For example, a graphite-based negative electrode active material, for example, it may include one or more selected from the group consisting of artificial graphite and natural graphite, but is not limited thereto.

It is not intended to be constrained by a specific theory, but when a PC-based compound is included in an electrolyte, due to the high binding energy between PC-based compound and lithium ions and the resulting clusters formed by the PC-based compound and lithium ions, the problem that a carbon-based negative electrode active material 11 is exfoliated may occur. On the other hand, in a negative electrode active material according to one embodiment, as a surface of the carbon-based negative electrode active material 11 is coated with the r-GO 12 as described above, the exfoliation of the carbon-based negative electrode active material may be suppressed even when a PC-based compound is included the electrolyte.

Specifically, when a carbon-based negative electrode active material 11 has a platelike structure, the carbon-based negative electrode active material may include an edge-plane, and the r-GO may surround the edge-plane of the carbon-based negative electrode active material, thereby preventing the exfoliation of the negative electrode active material due to a PC-based compound.

In an embodiment, the carbon-based negative electrode active material may include nitrogen. A negative electrode active material may include a nitrogen element, and specifically, a carbon-based negative electrode active material 11 may be doped with a nitrogen element, and accordingly, a graphene oxide may be applied onto a surface of the carbon-based negative electrode active material using electrostatic attraction.

In an embodiment, a negative electrode active material layer may further include a binder. A binder may be a material that improves the adhesion between a negative electrode current collector and a negative electrode active material and/or the adhesion between negative electrode active materials. In an embodiment, a binder may include one or more selected from the group consisting of styrene-butadiene rubber (SBR)-based binders, carboxymethyl cellulose (CMC), polyacrylic acid-based binders, poly(3,4-ethylenedioxythiophene) (PEDOT)-based binders, polyvinylidenefluoride (PVDF), poly(vinylidene fluoride-co-hexafluoropropylene copolymers, polyacrylonitrile, polymethylmethacrylate, acrylonitrile butadiene rubber (NBR), and polybutadiene rubber (BR), but is not limited to specific examples.

In an embodiment, a negative electrode active material layer may include a conductive material that can provide conductivity to a negative electrode. A conductive material may include, for example, one or more selected from the group consisting of metal-based conductive materials, carbon-based conductive materials, and conductive polymers. Metallic conductive materials may be, for example, metal powder or metal fibers of copper, nickel, aluminum, silver, or the like; conductive whiskers such as zinc oxide and potassium titanate; or a conductive metal oxide such as titanium oxide. A carbon-based conductive material may be, for example, graphite, carbon black, graphene, or carbon nanotubes. A conductive polymer may be, for example, a polyphenylene derivative.

In an embodiment, a negative electrode active material layer may optionally include a thickener. A thickener may improve the problem of cracks generated on the surface of a negative electrode by strengthening the cohesion of a binder. A thickener may include, for example, one or more selected from the group consisting of carboxymethyl cellulose, methyl cellulose, hydroxypropyl cellulose, methyl hydroxypropyl cellulose, ethyl hydroxyethyl cellulose, methyl ethyl hydroxyethyl cellulose, and cellulose gum.

In addition, a lithium secondary battery provided in one aspect of the present disclosure may include an electrolyte, and specifically, the electrolyte may include an electrolyte solution.

The electrolyte may include a PC-based compound, where the PC-based compound may be substituted or unsubstituted propylene carbonate. Specifically, the PC-based compound may be (unsubstituted) propylene carbonate. The electrolyte may be a non-aqueous electrolyte solution, and PC may be included as a solvent in the electrolyte solution. In an embodiment, the electrolyte may further include a lithium salt.

As an electrolyte includes a the PC-based compound, the lithium secondary battery provided in one aspect of the present disclosure may have excellent low-temperature properties.

In an embodiment, a lithium secondary battery provided in one aspect of the present disclosure may further include a separator.

A separator may be interposed between a negative electrode and a positive electrode. A separator is formed to prevent electrical short-circuiting between a negative electrode and a positive electrode and to generate a flow of ions. A separator may include a porous polymer film or a porous non-woven fabric. Here, the porous polymer film may be formed to be a single layer or a multilayer including a polyolefin-based polymer such as an ethylene polymer, a propylene polymer, an ethylene/butene copolymer, an ethylene/hexene copolymer, and an ethylene/methacrylate copolymer. The porous nonwoven fabric may include glass fibers with a high melting point and polyethylene terephthalate fibers. However, it is not limited thereto, and depending on the embodiment, a separator may be a highly heat-resistant separator (ceramic coated separator; CCS) including ceramic.

A lithium secondary battery provided in one aspect of the present disclosure may include an electrode assembly, and the electrode assembly may be manufactured by performing winding, lamination, folding, or zigzag stacking processes with the negative electrode, positive electrode, and separator. In addition, an electrode assembly may be provided together with an electrolyte solution to manufacture a secondary battery according to the present disclosure. A secondary battery may be any one of a cylindrical type using a can, a prismatic type, a pouch type, or a coin type, but is not limited thereto.

### Manufacturing method of negative electrode active material and manufacturing method of lithium secondary battery

In another aspect of the present disclosure, provided is a manufacturing method of a negative electrode active material, including: doping a carbon-based negative electrode active material with nitrogen; coating a surface of the carbon-based negative active material with a graphene oxide; and reducing the graphene oxide.

In still another aspect of the present disclosure, provided is a manufacturing method of a lithium secondary battery, including: preparing a carbon-based negative electrode active material coated with an r-GO; manufacturing an electrode assembly using a positive electrode and a negative electrode including the negative electrode active material; and injecting an electrolyte including a propylene carbonate-based compound into an accommodating space where the electrode assembly is accommodated therein.

Hereinafter, the negative electrode active material, carbon-based negative electrode active material, r-GO, positive electrode, negative electrode, PC-based compound, electrolyte, and the like are the same as each specifically described above.

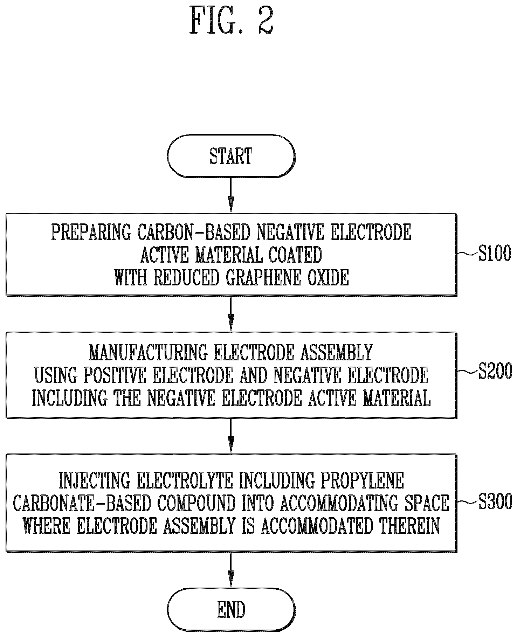

FIG. 2 shows a flowchart for explaining a manufacturing method of a lithium secondary battery according to one embodiment of the present disclosure.

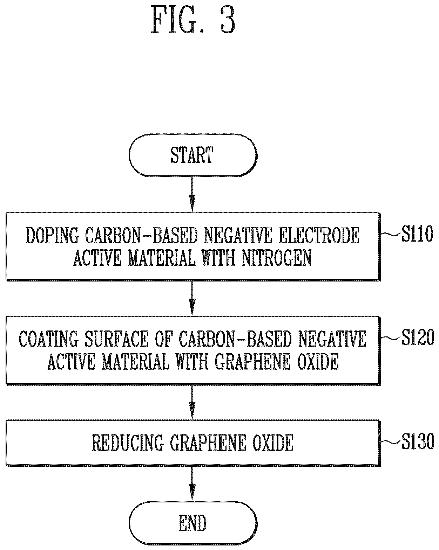

FIG. 3 shows a flowchart for explaining a manufacturing method of a negative electrode active material according to one embodiment of the present disclosure.

Hereinafter, a manufacturing method of a negative electrode active material and a manufacturing method of a lithium secondary battery according to an embodiment of the present disclosure will be described with reference to FIGS. 2 and 3.

Referring to FIG. 2, first, in the manufacturing method of a lithium secondary battery according to an embodiment of the present disclosure, a negative electrode active material may be prepared through S100 operation. A negative electrode active material may be a carbon-based negative active material coated with an r-GO.

In an embodiment, the doping a carbon-based negative electrode active material with nitrogen may include heat-treating the carbon-based negative electrode active material under an atmosphere in which ammonia gas flows.

The S100 operation of FIG. 2 may be explained in more detail with reference to FIG. 3. Referring to FIG. 3, in the operation S100 of preparing the negative electrode active material of FIG. 2, the carbon-based negative electrode active material may be doped with nitrogen through operation S110. In one embodiment, the carbon-based negative electrode active material may be doped with nitrogen by heat-treating the carbon-based negative electrode active material under an atmosphere in which ammonia gas flows. Accordingly, the nitrogen-doped carbon-based negative electrode active material may include nitrogen element.

In an embodiment, the coating a surface of the carbon-based negative electrode active material with a graphene oxide may include: dispersing the carbon-based negative electrode active material in a solvent; and injecting the graphene oxide into a solvent in which the carbon-based negative electrode active material is dispersed.

In addition, in the operation S100 of preparing the negative electrode active material of FIG. 2, a surface of the carbon-based negative electrode active material may be coated with a graphene oxide through operation S120. In an embodiment, the operation of coating the surface of the carbon-based negative electrode active material with a graphene oxide may include dispersing the carbon-based negative electrode active material in a solvent; and injecting the graphene oxide into a solvent in which the carbon-based negative electrode active material is dispersed. In one embodiment, the solvent may be water, but is not limited thereto. In the S120 operation, the carbon-based negative electrode active material may be a carbon-based negative electrode active material doped with nitrogen through the S110 operation.

In an embodiment, graphene oxide may be applied onto the surface of the carbon-based negative electrode active material by electrostatic attraction. In one embodiment, as a solution prepared by adding a carbon-based negative electrode active material and a graphene oxide to a solvent is stirred, the graphene oxide may be applied onto the surface of the carbon-based negative electrode active material by electrostatic attraction.

In an embodiment, the nitrogen element doped into the carbon-based negative active material may have + polarity, while a hydroxyl group and a carboxyl group included in the graphene oxide may have - polarity. Therefore, a part of the graphene oxide with - polarity is bonded to a part of the nitrogen-doped carbon-based negative electrode active material with + polarity by electrostatic attraction, so that the graphene oxide may be applied onto the surface of the carbon-based negative electrode active material.

In addition, in the operation S100 of preparing the negative electrode active material of FIG. 2, the graphene oxide applied onto the surface of the carbon-based negative electrode active material may be reduced through operation S130. In one embodiment, the graphene oxide may be reduced by heat-treating the carbon-based negative electrode active material coated with a graphene oxide under an atmosphere in which hydrogen gas flows. Accordingly, at least a part of the graphene oxide applied onto the surface of the carbon-based negative electrode active material may be converted into an r-GO.

In an embodiment, the preparing a carbon-based negative electrode active material coated with an r-GO may include: doping a carbon-based negative electrode active material with nitrogen; coating a surface of the carbon-based negative active material with a graphene oxide; and reducing the graphene oxide.

Next, in the manufacturing method of a lithium secondary battery according to one embodiment of the present disclosure, an electrode assembly may be manufactured through operation S200. As described above, an electrode assembly may include a positive electrode and a negative electrode, and may further include a separator between the positive electrode and the negative electrode. An electrode assembly may be manufactured by performing winding, lamination, folding, or zigzag stacking processes with the above-described negative electrode, positive electrode, and separator.

Next, in a manufacturing method of a lithium secondary battery according to an embodiment of the present disclosure, an electrolyte including a PC-based compound into an accommodating space may be injected to an accommodating space. An accommodating space may be a space in which the electrode assembly manufactured through the S200 operation is accommodated. In one embodiment, an accommodating space may be defined as a space inside a case of various shapes. In one embodiment, an electrolyte solution may be injected into an accommodating space after an electrode assembly is disposed in the accommodating space, but it is not limited thereto. In another embodiment, an electrolyte solution may be first injected into an accommodating space, and then an electrode assembly may be disposed into the accommodating space.

As described above, an electrolyte may further include a lithium salt, and PC may be included as a solvent of a non-aqueous electrolyte solution that is an electrolyte. By using PC as a solvent of an electrolyte solution, the low-temperature properties of a manufactured secondary battery may be improved.

### Examples

Hereinafter, embodiments of the present invention will be further described with reference to specific experimental examples. The examples and comparative examples included in the experimental examples are merely illustrative of the present invention and do not limit the scope of the appended claims, and it is obvious to those skilled in the art that various changes and modifications to the examples are possible within the scope and technical idea of the present invention, and it is natural that such changes and modifications fall within the scope of the appended claims.

### <Preparation Example 1> - Preparation of negative electrode active material

Graphite was placed in a crucible and heat-treated at 600 °C for five hours under an atmosphere in which NH₃ gas was flowing at 400 ppm. Accordingly, the surface of the heat-treated graphite was doped with nitrogen.

Next, the nitrogen-doped graphite and a graphene oxide were added to water at a weight ratio of 99:1, and the resulting mixture was stirred at room temperature for two hours at 400 rpm using a magnetic bar. The graphene oxide was evenly applied onto the surface of the nitrogen-doped graphite by electrostatic attraction between the graphene oxide dispersed in water and the nitrogen-doped graphite.

Thereafter, the graphite coated with the graphene oxide obtained through filtration was added back into the crucible and heat-treated at 800 °C for eight hours under an atmosphere in which H₂ gas was flowing at 1,000 ppm. Accordingly, the graphene oxide on the graphite surface was reduced to an r-GO.

### <Example 1> - Manufacturing of coin half-cell

A negative electrode active material composition was prepared by mixing the negative electrode active material of Preparation Example 1, multi-walled carbon nanotubes, carboxymethyl cellulose, and styrene butadiene rubber in water at a weight ratio of 97.1:0.4:1.2:1.3.

The prepared negative electrode active material composition was applied to a copper thin film, which was a negative electrode current collector. Thereafter, the composition was dried under vacuum at 130 °C for one hour to manufacture a negative electrode with a negative electrode active material layer formed on the copper thin film.

Thereafter, CR2032 type coin half cells using the negative electrode manufactured through the above-described process were manufactured. Metal lithium was used as a counter electrode, a polyethylene (PE) separator was used as a separator, and 1.0 M LiPF₆ dissolved in a PC solvent was used as an electrolyte solution.

### <Comparative Example 1>

A coin half-cell was manufactured in the same manner as in Example 1, except that an uncoated graphite was used instead of the negative electrode active material of Preparation Example 1.

### <Comparative Example 2>

A coin half-cell was manufactured in the same manner as in Comparative Example 1, except that ethylene carbonate was used as a solvent of the electrolyte solution instead of PC.

### <Experiment Example 1> Confirmation of charging and discharging performance

For the half-cells of Example 1, Comparative Example 1, and Comparative Example 2, the initial efficiency was calculated by confirming the first charge/discharge capacity using an electrochemical charge/discharge device.

The capacity per g was calculated for each of the half-cell batteries of Example 1, Comparative Example 1, and Comparative Example 2 under charging (0.1 C CC/CV charging, 0.005 V, 0.005 C cut) and discharging (0.1 C CC discharging, 1.5 V cut) conditions. Thereafter, the initial efficiency was calculated by calculating the discharge capacity/charge capacity, and the results are listed in Table 1 below.

**[Table 1]**

| | Initial efficiency (%) |
|---|---|
| Example 1 | 92 |
| Comparative Example 1 | 78 |
| Comparative Example 2 | 92 |

In other words, referring to Table 1, it can be confirmed that in the case of Example 1 in which the negative electrode active material of Preparation Example 1 was used, even when PC was used as a solvent of the electrolyte solution, the initial efficiency level was similar to that of Comparative Example 2 in which ethylene carbonate was used as a solvent of the electrolyte solution.

In addition, it can be confirmed that in the case of Example 1 in which the negative electrode active material graphite with its surface coated with an r-GO was used as a negative electrode active material, as in Preparation Example 1, the initial efficiency was significantly superior to that of the Comparative Example 1 in which graphite with an uncoated surface was used as a negative electrode active material.

### <Experiment Example 2> Confirmation of capacity retention

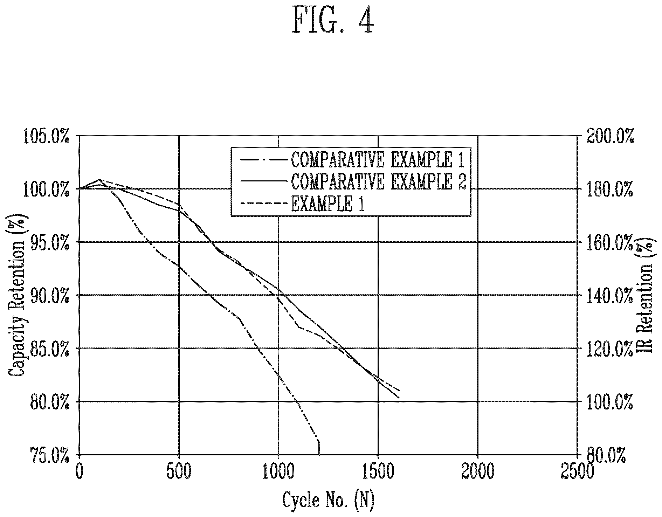

FIG. 4 shows a graph illustrating the capacity retention of lithium secondary batteries according to one example and comparative examples of the present disclosure.

For the half-cells of Example 1, Comparative Example 1, and Comparative Example 2, the capacity retention at 25 °C was evaluated using an electrochemical charge/discharge device.

Changes in the capacity were observed for the half-cell batteries of Example 1, Comparative Example 1, and Comparative Example 2 under charging (0.5 C CC/CV charging 0.005 V, 0.005 C cut) and discharging (0.5 C CC discharging 1.0 V cut) conditions. The results are shown in FIG. 4.

Referring to FIG. 4, it can be confirmed that in the case of Example 1 in which the negative electrode active material of Preparation Example 1 was, even when PC was used as a solvent of the electrolyte solution, the capacity retention was similar to that of Comparative Example 2 in which ethylene carbonate was used as a solvent of the electrolyte solution.

In addition, it can be confirmed that in the case of Example 1 in which the negative electrode active material graphite with its surface coated with an r-GO was used as a negative electrode active material, as in Preparation Example 1, the capacity retention significantly better compared to Comparative Example 1 in which graphite with an uncoated surface was used as a negative electrode active material.

Summarizing Experimental Example 1 and Experimental Example 2, when graphite is used as a negative electrode active material and PC is used as a solvent of the electrolyte solution as in Comparative Example 1, PC and lithium ions form clusters, and when these clusters are inserted into an interlayer structure of graphite, the graphite is exfoliated, resulting in the generation of irreversible capacity. For this reason, the initial efficiency and capacity retention of Comparative Example 1 were low.

On the other hand, when graphite coated with an r-GO is used as a negative electrode active material as in Example 1, even when PC is used as a solvent of the electrolyte solution, the exfoliation of the negative electrode active material due to insertion of the clusters of PC and lithium ions may be prevented. Accordingly, Example 1 could have a similar level of initial efficiency and capacity retention as Comparative Example 2 in which no clusters were generated.

In addition, it can be expected that Example 1, in which propylene carbonate was used as a solvent of the electrolyte solution, would have superior low-temperature properties compared to Comparative Example 2, in which ethylene carbonate was used as a solvent of the electrolyte solution.

## Claims

1. A lithium secondary battery comprising:
a positive electrode;
a negative electrode including a carbon-based negative electrode active material coated with a reduced graphene oxide (r-GO); and
an electrolyte including a propylene carbonate-based compound.

2. The lithium secondary battery according to claim 1, wherein the electrolyte further includes a lithium salt.

3. The lithium secondary battery according to claims 1 or 2, wherein the carbon-based negative electrode active material coated with the r-GO has a core-shell structure consisting of a core including a carbon-based negative electrode active material and a shell including an r-GO.

4. The lithium secondary battery according to any one of claims 1 to 3, wherein the carbon-based negative electrode active material includes a negative electrode active material of a plate type structure.

5. The lithium secondary battery according to any one of claims 1 to 4, wherein the carbon-based negative electrode active material includes artificial graphite, natural graphite, or a combination thereof.

6. The lithium secondary battery according to any one of claims 1 to 5, wherein the carbon-based negative electrode active material includes an edge-plane, and the r-GO surrounds the edge-plane of the carbon-based negative electrode active material.

7. The lithium secondary battery according to any one of claims 1 to 6, wherein the carbon-based negative electrode active material includes a nitrogen element.

8. A manufacturing method of a negative electrode active material, comprising:
doping a carbon-based negative electrode active material with nitrogen;
coating a surface of the carbon-based negative active material with a graphene oxide; and
reducing the graphene oxide.

9. The manufacturing method according to claim 8, wherein the doping a carbon-based negative electrode active material with nitrogen includes heat-treating the carbon-based negative electrode active material under an atmosphere in which ammonia gas flows.

10. The manufacturing method according to claims 8 or 9, wherein the coating a surface of the carbon-based negative electrode active material with a graphene oxide includes:
dispersing the carbon-based negative electrode active material in a solvent; and
injecting the graphene oxide into a solvent in which the carbon-based negative electrode active material is dispersed.

11. The manufacturing method according to any one of claims 8 to 10, wherein the graphene oxide is applied onto the surface of the carbon-based negative electrode active material by electrostatic attraction.

12. The manufacturing method according to any one of claim 8 to 11, wherein the reducing the graphene oxide includes heat-treating the carbon-based negative electrode active material coated with the graphene oxide under an atmosphere in which ammonia gas flows.

13. A manufacturing method of a lithium secondary battery, comprising:
preparing a carbon-based negative electrode active material coated with a reduced graphene oxide (r-GO);
manufacturing an electrode assembly including a positive electrode and a negative electrode including the negative electrode active material; and
injecting an electrolyte including a propylene carbonate-based compound into an accommodating space where the electrode assembly is accommodated therein.

14. The manufacturing method according to claim 13, wherein the preparing a carbon-based negative electrode active material coated with an r-GO includes:
doping a carbon-based negative electrode active material with nitrogen;
coating a surface of the carbon-based negative active material with a graphene oxide; and
reducing the graphene oxide.
